# EUROPEAN PATENT APPLICATION

(11) **EP 2 454 980 A1**
(43) Date of publication of application: **23.05.2012**
(21) Application number: 10384004.7
(22) Date of filing: 19.11.2010
(51) Int. Cl.: A47J 43/07, A47J 43/08

(54) **Food processor**

(71) Applicant: Vendall Comercial 2003, S.L., 08029 Barcelona (ES)
(72) Inventor: Grifé de Pascual, José Manuel, 08029 Barcelona (ES)
(74) Representative: Isern-Jara, Jaime

(57) **Abstract**

The new food processor comprises a main body of a general prismatic shape, having: a large upper opening suitable for the housing of a jar to contain food to be processed, a supporting base housing an electrical motor, and a side plate with an indicating screen for operation guidelines and command buttons. A circular lid for the jar extends in a tongue-shaped protrusion serving for insertion into the frontal part of the jar mouth and in a lower appendage corresponding to an electrical safety contact. The jar base establishes a second electrical contact with the main body. At the jar base the cutting blades axle bears a sprocket corresponding to a recess of the same shape formed on the motor axle, with a manually operated mechanism that couples the sprocket to its corresponding recess. A second manually operated mechanism allows the clamping of the sprocket to the recess.

## Description

### Object of the invention

The present invention relates to a food processor, designed to facilitate the tasks of food preparation and the preparation of meals.

### Field of the invention

Is that of the manufacture of electrical appliances, especially those designed to help housewives in their tasks related to the preparation of meals.

### Background of the invention

There are known different types of appliances designed to process food prior to meal preparation, with the aim to simplify the work of the persons regularly or occasionally dedicated to said occupation, in order to obtain function-ally nutrient and at the same time esthetical and attactive dishes.

The food processors known of until now are generally very complex in use and operation, with the result that they are less practical. Their use is often rather complicated, especially in the case of some older housewives, and at the same time their functioning is relatively slow because of the number of combined operations that are required.

So there is a need for a food processor of relatively simple structure and operation, suitable for people with no special culinary skills and who need to prepare a wide variety of meals in a reasonably short space of time, whether occasionally or on a daily basis.

### Brief description of the invention

It refers to a culinary apparatus which exclusively performs the functions of preparation and cooking of food. In preparation, the new food processor can liquidise, mix, mince, chop, blend, whip, beat, knead, grate, grind and crush. And in cooking, it can fry, steam, stew and make soups.

An important feature of the new appliance is its capacity to fry food, thus distinguishing it from other appliances, also referred to as food processors, that do not allow performing said culinary function.

ln order to facilitate its explanation, the present invention is further illustrated by the following, non-restricted drawings, where one possible embodiment of the improved food processor has been shown, as described in the attached patent claims.

### Brief description of the drawings

Figure 1 is a perspective view of the new food processor complete and mounted, fig. 2 is a plan of the same, fig. 3 is an enlarged detail of the upper and side parts, and fig. 4 is a perspective view of the jar containing food to be processed.
Figures 5A, 5B and 5C are views of the lower part of the jar showing its driving elements for the cutting knives and for the electrical feeding of the motor, related to corresponding elements shown in fig. 6.

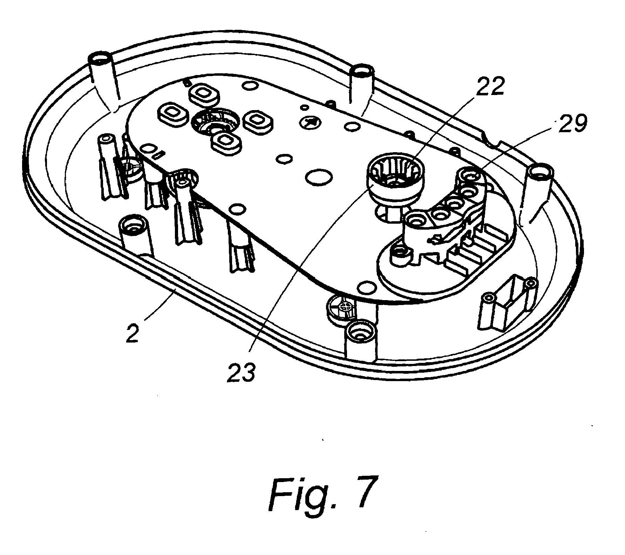

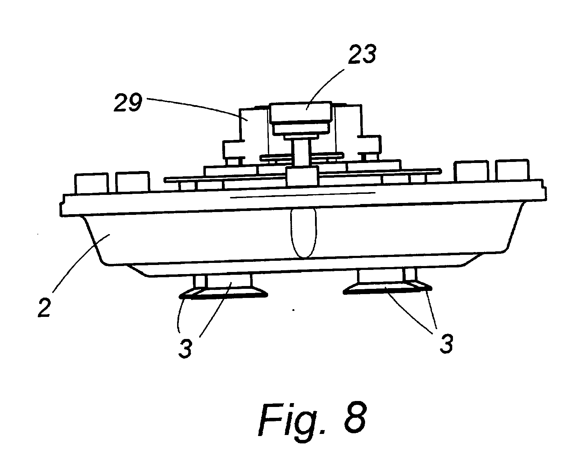

Fig. 7 is a perspective view of the base of the appar-atus that houses the driving motor, said base being shown in fig. 8.

### Detailed description of the invention

The elements designated with numbers on the drawings correspond to the parts as indicated hereinafter.

The food processor described below consists physically of a tabletop body 1 of a general prismatic shape and qua-drangular sides, with rounded edges and a pleasant aspect, the result of refined industrial design. It rests on a base 2, preferably provided with legs 3 for support, housing an electrical motor for driving and also coupling elements.

The body 1 bears on the side a display and command plate 4, including an LCD screen showing signs and symbols concerning the operation of the apparatus.

The body 1 also shows a lsrge upper opening for housing a jar 6 designed to contain food to be processed, including a handle 7 and a lid 8 that has a central hole 9 and extends in a tongue 10 whose function will be described hereinafter.

The plate 4 also has command buttons for the operating devices of the apparatus: a button 11 for a timer, a button 12 for starting and stopping, a pulse button 13, a button 14 for a thermostat and a button 15 for a speed control.

The jar 6 has a base 16 provided with coupling and electrical feeding elements, and in its upper mouth it forms an enlargement 17, a retaining recess and an electrical contact 18, corresponding to a L-shaped finger 18 formed on the lower side of the lid 8.

The jar 6 is preferably made of stainless steel and on its exterior and interior walls bears signs 39 corresponding to the levels of contained products. The interior houses the conventional type of cutting blades, for instance, having three or more cutting blades that stem from a hub (core) able to be mounted and dismounted on axis 24 of the driving motor (not shown).

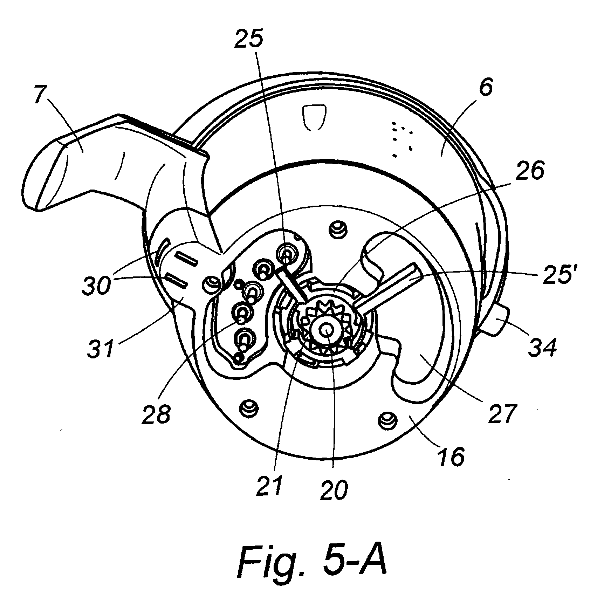

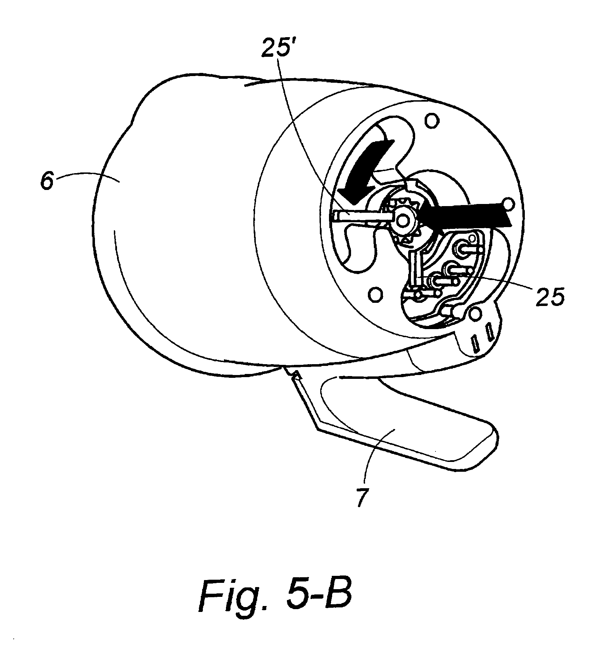

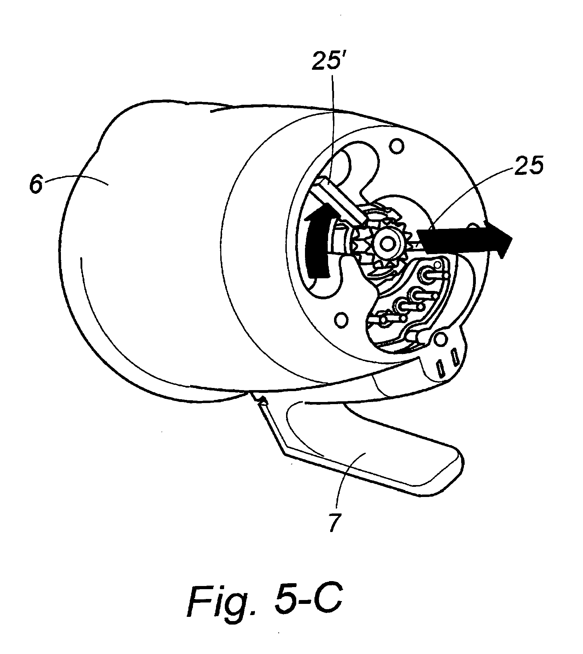

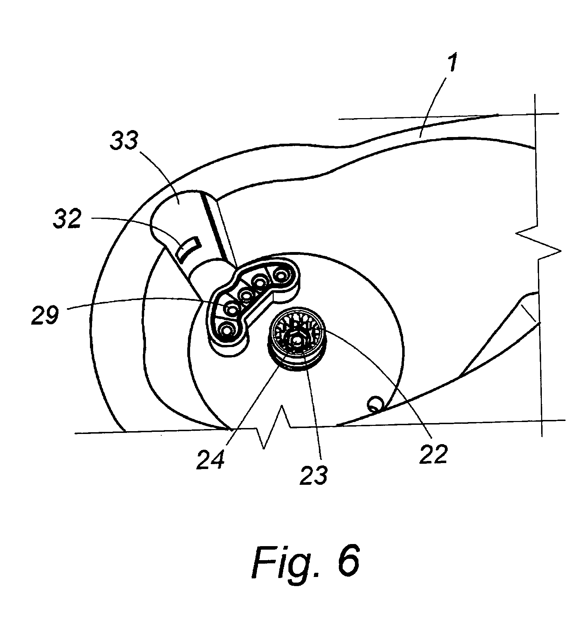

The base 16 of the jar 6 holds (fig. 5) the central axis 20 incorporating a sprocket (cog wheel) 21, intended to couple by insertion into an equally shaped recess 22 defined by an annular member 23, mounted on axis 24 of the electrical motor housed in base 2 of the apparatus (fig. 6).

The lever 25 belongs to a retaining and release mechanism for the knives, in order to extract said knives when desired (for instance, for cleaning purposes); said lever 25 can turn a certain angle, adopting two limiting positions between two stoppers, corresponding to respective positions of the sprocket 21: one, projecting, in line with its coupling approach to the recess 22 of the motor, and another, retracted, for the separation of the sprocket from the motor's recess 22.

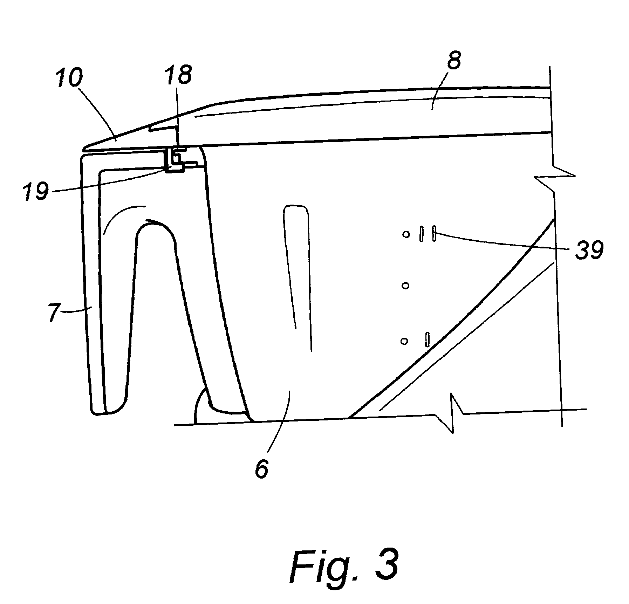

The lever 25' pertaining to ring 26 (fig. 3), when desired, immobilises the above mentioned mechanism for retaining and releasing the cutting knives, and can also turn a certain angle between two positions: one to retain and another to free the knives. Manual operation of lever 25' is facilitated by the curved recess 27 that, in its central part, has two limit points for the lever.

The group of curved metal pins 28 defines the male elements of a set of electrical contacts in the jar 6, corresponding to female elements 29 located at the base 2 of the apparatus (fig. 6).

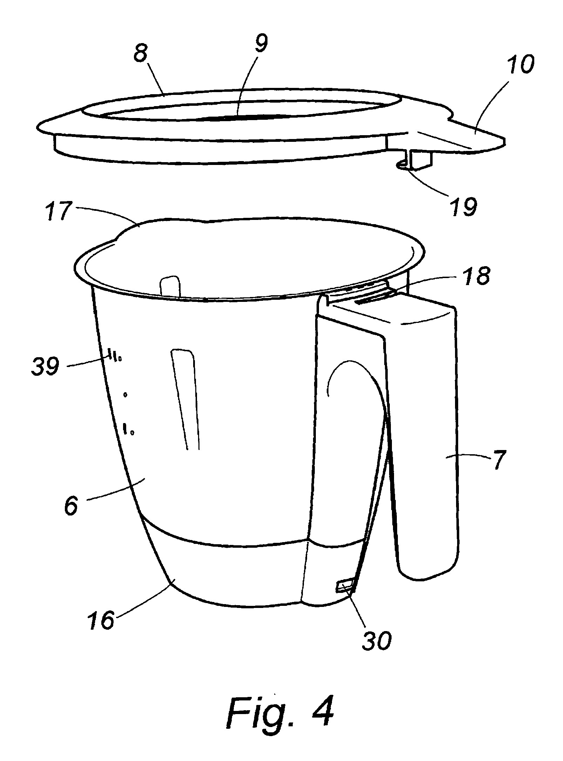

To start this food processor, after the introduction of the products to be processed into jar 6, the jar is placed in the large upper opening designated in the body 1, adjusting the position so that the contact element 30 at the base 16 of the jar (figs. 4 and 5) corresponds to the contact element 32 situated in the recess 33 of body 1; at the same time the male contact elements 28 of the base fit into the respective female contact elements 29 of body 1.

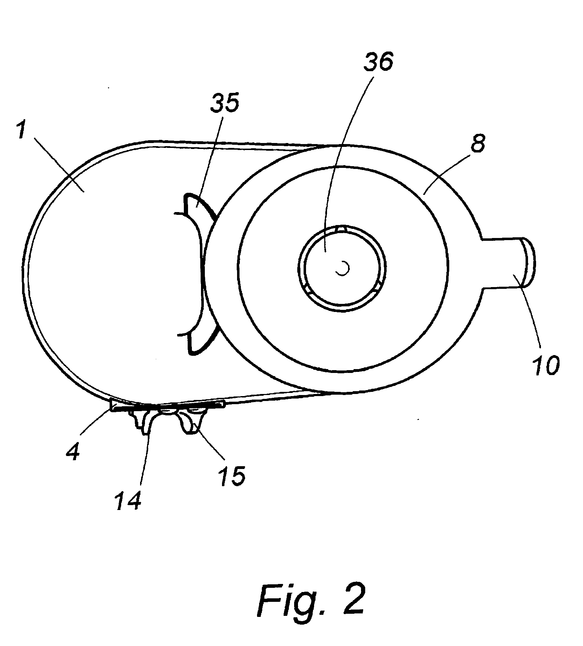

Immediately after, the lid 8 is placed over the jar mouth, so that the L-shaped contacting element 19 (figs. 3 and 4), situated in the tongue-shaped extension 10 of the lid, fits in the slot 18 of the mouth. At the same time, the tongue-shaped protrusion 34 of the jar, formed at zone 17 of the mouth, is placed beneath a slot in the curved region 35 (fig. 2) and afterwards the lid 8 is centered so that the tongue 10 exactly coincides with the top of handle 7. In this state the electrical contacts established between the jar 6 and the body 1 are functioning and the start-up of the apparatus is feasible.

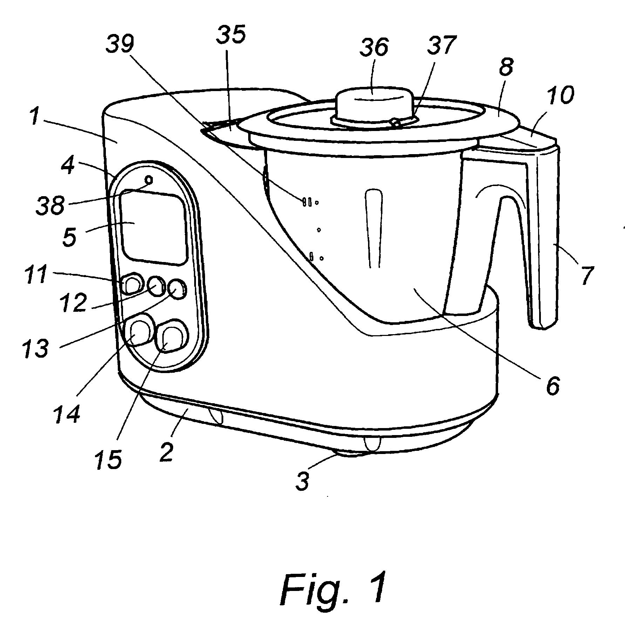

The cylindrical dosing vessel 36, with annular peripheral rim 37 (fig. 1), has a diameter corresponding to the hole 9 in the lid 8 and allows the introduction of condiments and other food articles into the jar 6.

The connection of the motor of the apparatus to the electrical network is indicated by the pilot light 38 in the plate 4 of body 1.

The above described processor is preferably completed with accessories such as a stainless steel basket with holes for steam cooking, a set of trays also for steam cooking, a spatula for kneading and a heat resistant spatula.

## Claims

1. Food processor, designed to facilitate the tasks of food conditioning and preparation of meals, **characterised in that** it comprises a body (1) of a general prismatic shape with rounded edges and a quadrangular base, having a wide upper hole provided to receive and house a jar (6) containing the food articles to be processed and a group of cutting blades, including a set of safety electrical contacts between the body (1) and the jar (6).

2. Food processor, according to claim 1, **characterised in that** the body (1) comprises a lower base (2) in the shape of a quadrangular tray housing an electrical motor driving a set of cutting blades, a first coupling means to drive said cutting blades and a plurality of metal elements (29) defin-ing female electrical contact elements.

3. Food processor, according to claims 1 and 2, charac-terised in that the jar (6), in the form of a frustum, has a base (16) whose lower part includes a second coupling means to drive the cutting blades and a number of metal elements (28) defining male electrical contact elements corresponding to the female contact elements (29).

4. Food processor, according to claims 1 to 3, charac-terised in that the first coupling means to drive the cut-ting blades comprises an axle (20) mounted on the blade axle, a manually operated mechanism to produce the coupling and separation of the cutting blades, and a sprocket (21) mounted on the axle (20).

5. Food processor, according to claims 1 to 4, charac-terised in that the manual-actioning mechanism for the coupling and separation of the cutting blades comprises a lever (25) angularly mobile between one coupling position and one releasing position for the cutting blades.

6. Food processor, according to claims 1 to 5, charac-terised in that the second coupling means to drive the cut-ting blades comprises an annular element (23) connected to the electrical motor axle and inside defining a number of slots (22) corresponding to the teeth of sprocket (21) of the driving means corresponding to the jar (16).

7. Food processor, according to claims 1 to 6, charac-terised in that it provides a first means for the secure positioning of the jar (6) in respect of the body (1) of the apparatus, said means consisting of elements (30) for elec-trical interruption in a protrusion on the lower side (31) of the jar (6) corresponding to an element (32) located in a recess (33) in the body (1).

8. Food processor, according to claims 1 to 7, charac-terised in the provision of a second means for the secure positioning of the jar (6) in respect of body (1) defined by elements that at the same time serve for the interruption of the electrical connection of the apparatus, said second being formed by an L-shaped protrusion (19), forming a tongue in the lid (8), corresponding to a slot (18) located at the external part of the jar mouth and over the handle (7).

9. Food processor, according to claims 1 to 8, charac-terised in that the correct positioning of the lid (8) over the jar (6) mouth, which is necessary to allow the operat-ion of the apparatus, is obtained by the insertion of a tongue-shaped protrusion (34) from the lid (8) into a slot formed in a curved element (35) in the upper part of body (1), as well as by the positioning of a second tongue-shaped protrusion (10) over the handle (7) of the jar (6).

10. Food processor, according to claims 1 to 9, charac-terised in that the lid (8) has a central hole (9) of a diameter corresponding to the diameter of a dosing cylindrical vase (36) attached to the apparatus.
